Europäisches Patentamt

European Patent Office

Office européen des brevets

(11) Veröffentlichungsnummer: **0 514 730 A1**

# EUROPÄISCHE PATENTANMELDUNG

(21) Anmeldenummer: **92107871.3**

(22) Anmeldetag: **08.05.92**

(51) Int. Cl.⁵: **B65G 53/52**, B65G 53/06, F17D 3/08

(30) Priorität: **11.05.91 DE 4115492**

(43) Veröffentlichungstag der Anmeldung:
**25.11.92 Patentblatt 92/48**

(84) Benannte Vertragsstaaten:
**AT BE CH DE DK ES FR GB GR IT LI LU MC NL PT SE**

(71) Anmelder: **Wedemann, Ernst**
**Kampchaussee 41b**
**W-2050 Hamburg 80(DE)**

(72) Erfinder: **Wedemann, Ernst**
**Kampchaussee 41b**
**W-2050 Hamburg 80(DE)**

(74) Vertreter: **Heldt, Gert, Dr. Dipl.-Ing.**
**Neuer Wall 59 III**
**W-2000 Hamburg 36(DE)**

(54) **Automatisch konfigurierbares molchbares Rohrleitungssystem.**

(57) Eine Vorrichtung zum Transport mindestens eines fließfähigen Materials weist mindestens einen Einlaß, mindestens einen Auslaß sowie mindestens eine den Einlaß mit dem Auslaß verbindende Transportleitung (1) auf. Im Bereich der mindestens eine Materialquelle (5) mit mindestens zwei Materialaufnahmen (6) verbindenden molchbaren Transportleitung (1) ist mindestens eine einen vorgebbaren Materialweg einstellende molchbare Leitungsweiche (16) angeordnet, die eine automatisch ansteuerbare Betätigungseinrichtung (56) aufweist. Die Betätigungseinrichtung kann als eine pneumatisch oder hydraulisch verstellbare Kolben-Zylinder-Anordnung oder als ein elektrisch angetriebener Verstellmotor ausgebildet sein. Die Leitungsweiche (16) ist als ein einen Einlaß mit mindestens zwei Auslässen verbindendes Mehrwegeventil, insbesondere ein Drei-Wege-Ventil (18) ausgebildet. Sie kann auch als ein einen Einlaß mit fünf Auslässen verbindendes Sechs-Wege-Ventil (15) ausgebildet sein. Eine als Drei-Wege-Ventil (18) ausgebildete Leitungsweiche (16) ist im Bereich einer Verzweigung der Transportleitung (1) zu mindestens einer Materialaufnahme (6) angeordnet.

Fig. 1

Die Erfindung betrifft eine Vorrichtung zum Transport mindestens eines fließfähigen Materials, die mindestens einen Einlaß, mindestens einen Auslaß Sowie mindestens eine den Einlaß mit dem Auslaß verbindende Transportleitung aufweist.

Derartige Vorrichtungen werden beispielsweise verwendet, um im industriellen Bereich eine Vielzahl von Materialquellen und Materialaufnahmen miteinander zu verbinden. Ein derartiges Erfordernis liegt insbesondere im Bereich der Chemie-, Pharmazie- und Nahrungsmittelproduktion vor. Darüber hinaus ist eine Anwendung bei der Erstellung von Tankanlagen oder in Betrieben mit einer Farbenproduktion gegeben. Durch die Transportleitung können fließfähige Materialien unterschiedlicher Konsistenz transportiert werden. Insbesondere können flüssige, staubförmige oder granulatartige Materialien durch die Transportleitung gefördert werden.

Es sind dazu in der Regel eine Vielzahl von Rohrleitungen vorhanden, die mit einem erheblichen finanziellen Aufwand installiert werden müssen und durch ihr nicht unerhebliches Bauvolumen eine kompakte Ausführung der Anlage sowie eine gute Zugänglichkeit von einzelnen Anlagenbestandteilen beeinträchtigen. Obwohl oftmals zu einem bestimmten Zeitpunkt durch nur jeweils eine dieser Rohrleitungen Material gefördert wird, ist dennoch eine umfassende Rohrinstallation erforderlich.

Aufgabe der vorliegenden Erfindung ist es daher, eine Vorrichtung der einleitend genannten Art so zu verbessern, daß der Installationsaufwand vermindert wird und erforderliche Verbindungen mit geringem Arbeitsaufwand hergestellt werden können.

Diese Aufgabe wird erfindungsgemäß dadurch gelöst, daß im Bereich der mindestens eine Materialquelle mit mindestens zwei Materialaufnahmen verbindenden Transportleitung mindestens eine einen vorgebbaren Materialweg einstellende molchbare Leitungsweiche angeordnet ist, die eine automatisch angesteuerbare Betätigungseinrichtung aufweist.

Durch die wahlweise Verbindung der Materialaufnahmen mit den Materialquellen über die molchbare Transportleitung ist es möglich, nacheinander unterschiedliche Materialien durch eine gemeinsame Transportleitung zu fördern. Der Aufwand an erforderlicher Installation kann hierdurch erheblich herabgesetzt werden. Eine Vermischung eines aktuell zu fördernden Materials mit einem zuvor geförderten Material kann dadurch verhindert werden, daß vor einem Wechsel der über die Transportleitung an eine Materialquelle angeschlossenen Materialaufnahme die Transportleitung gemolcht wird. Hierbei wird eine als Rohrmolch ausgebildete Reinigungsvorrichtung von einem Druckmedium, beispielsweise Luft, durch die Transportleitung hindurchgedrückt und säubert dabei einen Innenraum der Transportleitung von anhaftenden Materialrückständen.

Mit Hilfe der automatisch ansteuerbaren Betätigungseinrichtung können Änderungen im Bereich der von der Transportleitung ausgebildeten Verbindungswege mit geringem Aufwand durchgeführt werden. Es ist beispielsweise möglich, Schaltbefehle im Bereich einer zentralen Bedienwarte einzugeben, die über Steuerleitungen mit den Betätigungseinrichtungen verbunden ist. Ein manuelles Lösen von Rohrverbindungen sowie Änderungen der relativen Anordnung von Rohrteilen zur Schaffung von unterschiedlichen Verbindungswegen werden hierdurch vermieden.

Gemäß einer bevorzugten Ausführungsform der Erfindung ist vorgesehen, daß die Leitungsweiche als ein Mehrwegeventil ausgebildet ist. Insbesondere bei einer Ausbildung als ein Drei-Wege-Ventil ist es mit geringem konstruktiven Aufwand möglich, einen Materialstrom wahlweise einem von zwei Zielen zuzuleiten. Automatisch ansteuerbare Drei-Wege-Ventile sind beispielsweise als Pneumatikventile in unterschiedlichen Ausführungsformen verfügbar und können in Abhängigkeit von den Einsatzbedingungen und dem zu steuernden Materialstrom ausgewählt werden.

Gemäß einer anderen bevorzugten Ausführungsform der Erfindung ist im Bereich der Steuereinrichtung ein Speicher vorgesehen, der für auswählbare Verbindungswege Tabellen mit vorzunehmenden Schaltfunktionen bereitstellt. Ein Benutzer der Steuereinrichtung braucht bei Verwendung eines derartigen Speichers lediglich eine ausgewählte Materialquelle und eine ausgewählte Materialaufnahme angeben. Die Steuereinrichtung ermittelt anschließend automatisch die zu betätigenden Leitungsweichen und nimmt die erforderlichen Stellvorgänge automatisch vor.

Gemäß einer anderen bevorzugten Ausführungsform der Erfindung ist vorgesehen, daß der Speicher freiprogrammierbar ausgebildet ist. Eine derartige Ausbildung ermöglicht einem Benutzer eine Änderung von vorgebbaren Materialwegen sowie eine Anpassung an Veränderungen im Bereich des Transportsystems, insbesondere eine Anpassung an Systemerweiterungen. Die erforderlichen Schaltungsabläufe können über eine Eingabeeinheit vorgegeben werden und sind aus dem Speicher abrufbar.

Gemäß einer weiteren bevorzugten Ausführungsform der Erfindung ist die Transportleitung mit einem Molchsender bzw. einem Molchfänger verbunden. Der Molchsender ermöglicht es, in einfacher Weise einen Rohrmolch in die Transportleitung einzuleiten. Der Molchsender weist dazu eine Molchkammer auf, in die der Molch eingesetzt werden kann. Im Bereich eines der Transportleitung abgewandten Endes des Molchsenders ist ein Druckanschluß vorgesehen, über den beispielsweise Druckluft in den Molchsender eingeleitet werden kann, um den Rohrmolch durch die Transportleitung hindurchzutreiben. Nach einem Durchlaufen der Transportleitung gelangt der Rohrmolch in den Bereich des Molchfängers, in den die aus dem Bereich der Transportleitung entfernten Verunreinigungen hineingetragen werden. Im Bereich eines der Transportleitung abgewandten Endes ist der Molchfänger mit einer Druckentlastung versehen, durch die vor dem Rohrmolch hergeschobene Luft- und Gasanteile entweichen können, um den Aufbau eines Überdruckes vor dem Rohrmolch und damit eine Behinderung seiner Vorwärtsbewegung zu vermeiden. Grundsätzlich ist es jedoch auch möglich, im Bereich der Materialaufnahmen eine Wendeschleife anzuordnen, in deren Bereich ein Druckmittelanschluß vorgesehen ist. Mit Hilfe der Wendeschleife kann der Rohrmolch in den Bereich des Molchsenders zurückgeführt werden. Hierzu wird die Druckbeaufschlagung im Bereich des Molchsenders beendet und ein Förderdruck im Bereich der Wendeschleife eingeleitet. Diese Ausführungsform hat den wesentlichen Vorteil, daß Verunreinigungen aus dem Bereich der Transportleitung im Bereich eines kombinierten Molchsenders/Molchempfängers gesammelt werden und eine manuelle Entnahme von Rohrmolchen aus im Bereich der Materialaufnahmen angeordneten Molchfängern nicht erforderlich ist.

Weitere Einzelheiten der vorliegenden Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

Fig. 1: eine Prinzipskizze einer Vorrichtung mit zwei Materialquellen und gruppenartig angeordneten Materialaufnahmen,

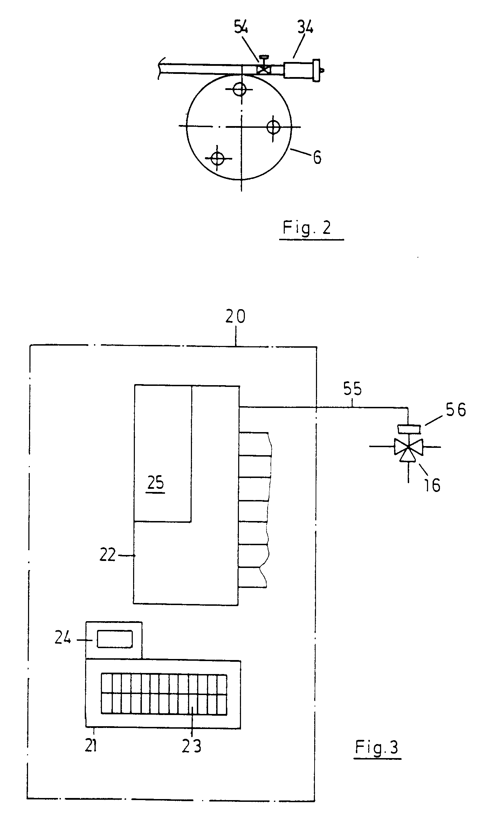

Fig. 2: eine Draufsicht auf eine Materialaufnahme, in deren Bereich ein Molchfänger angeordnet ist,

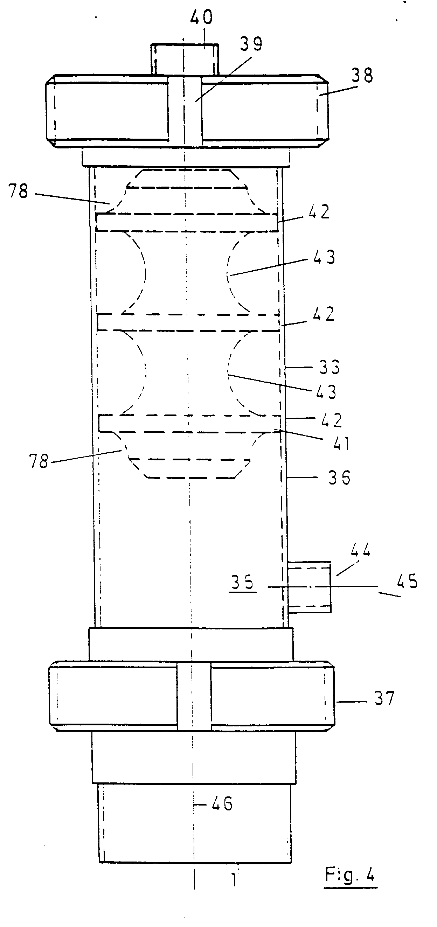

Fig. 3: eine Prinzipdarstellung einer Steuereinrichtung mit Speicher- und Eingabeeinrichtung,

Fig. 4: eine prinzipielle Darstellung eines Molchsenders,

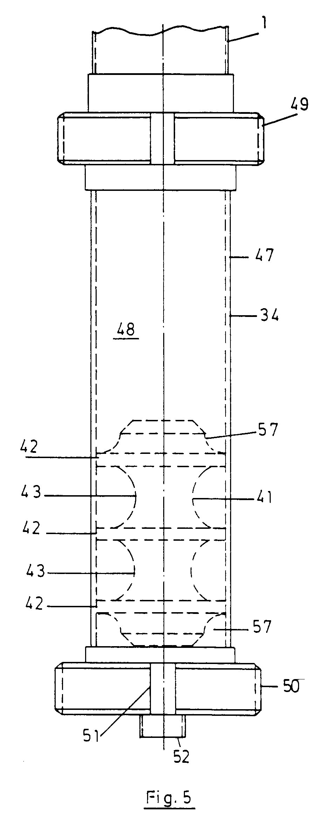

Fig. 5: eine prinzipielle Darstellung eines Molchfängers,

Fig. 6: eine prinzipielle Darstellung einer molchbaren Leitungsweiche,

Fig. 7: eine andere Positionierung der Leitungsweiche nach Figur 7 **und**

Fig. 8: eine weitere Positionierung der Leitungsweiche nach Figur 7.

Eine Vorrichtung zum Transport mindestens eines fließfähigen Materials besteht im wesentlichen aus einer Transportleitung (1), die mit Einlässen (2) sowie Auslässen (3) versehen ist. Über die Transportleitung (1) können wahlweise Materialstationen (4) miteinander verbunden werden. Die Materialstationen (4) sind als das zu transportierende Material in die Transportleitung (1) einspeisende Materialquellen (5) sowie das transportierte Material aufnehmende Materialaufnahmen (6) ausgebildet.

Zwischen der beispielsweise als Lösekessel (7) ausgebildeten Materialquelle (5) und der Transportleitung (1) ist eine Pumpe (8) zur Förderung des zu transportierenden Materials angeordnet. In Anschlußleitungen (9,10), die die Pumpe (8) mit der Materialquelle (5) einerseits und mit der Transportleitung (1) andererseits verbinden, sind Absperreinrichtungen (11,12) angeordnet. Insbesondere ist daran gedacht, die Absperreinrichtungen (11,12) als elektrisch oder pneumatisch steuerbare Kugelhähne auszubilden. Prinzipiell ist es jedoch auch möglich, andere Antriebsmittel für die Absperreinrichtungen (11,12) vorzusehen und beispielsweise eine hydraulische Betätigung zu verwenden. Die der Transportleitung (1) zugewandt angeordnete Anschlußleitung (10) mündet im Bereich eines molchbaren T-Stückes (13) in die Transportleitung (1) ein.

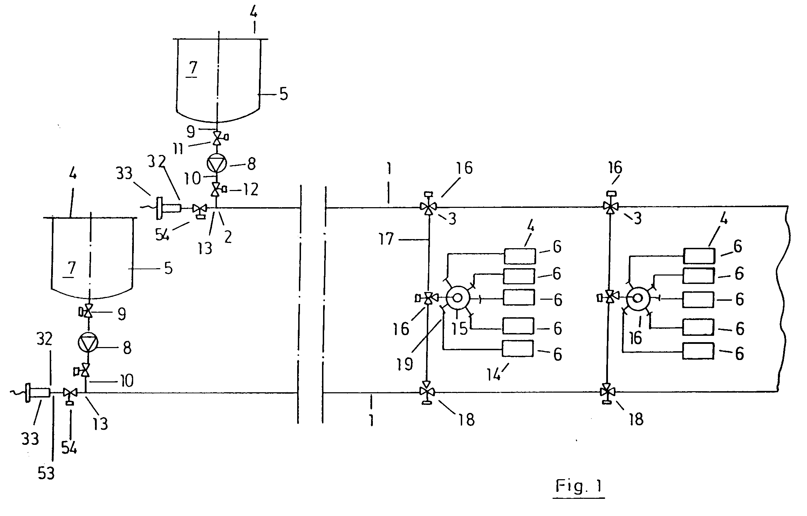

Bei der Ausführungsform gemäß Figur 1 sind die als Tankbehälter (14) ausgebildeten Materialaufnahmen (6) gruppenartig angeordnet. Jeweils fünf Tankbehälter (14) sind über eine als Sechs-Wege-Ventil (15) ausgebildete Leitungsweiche (16) an eine Querleitung (17) angeschlossen, die zwei Transportleitungen (1) verbindet. Jeweils im Bereich der Enden der Querleitung (17) sind als Drei-Wege-Ventile (18) ausgebildete Leitungsweichen (16) angeordnet, die die Querleitung (17) an die Transportleitungen (1) anschließen. Darüber hinaus ist im Bereich einer das Sechs-Wege-Ventil (15) mit der Querleitung (17) verbindenden Anschlußleitung (19) ein weiteres Drei-Wege-Ventil (18) angeordnet. Die Leitungsweichen (16) sind automatisch betätigbar und können beispielsweise pneumatisch, elektrisch oder hydraulisch angetrieben sein.

Die Ansteuerung der Leitungsweichen (16) erfolgt von einer Bedienwarte (20) aus, in deren Bereich eine mit einer Eingabeeinheit (21) versehene Steuereinrichtung (22) angeordnet ist. Die Eingabeeinheit (21) ist als eine Tastatur (23) ausgebildet und zur optischen Darstellung von Eingaben ist eine Anzeigeeinheit (24) vorgesehen, die beispielsweise als Display oder als Bildschirm ausgebildet ist. Im Bereich der Steuereinrichtung (22) ist ein Speicher (25) vorgesehen, der Verknüpfungstabellen zur Vornahme von Betätigungsvorgängen der Leitungsweichen (16) enthält. Durch diese Verknüpfungstabellen ist festgelegt, welche Leitungsweichen (16) zur Erzeugung einer ausgewählten Verbindung einer bestimmten Materialquelle (5) mit einer bestimmten Materialaufnahme (6) betätigt werden müssen.

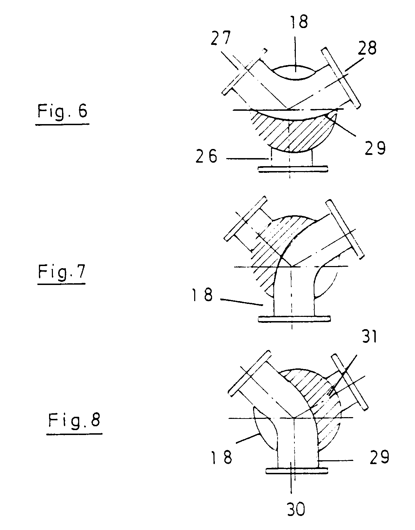

Ein Drei-Wege-Ventil (18) kann entsprechend den Darstellungen in Figur 6 bis Figur 8 mit drei Anschlüssen (26,27,28) versehen sein, von denen jeweils zwei wahlweise durch ein Verbindungselement (29) ineinander übergeleitet werden. Das Verbindungselement (29) weist eine geschwungen ausgebildete Durchlaßausnehmung (30) auf und ist in einem Gehäuse (31) rotationsfähig gelagert.

Im Bereich von Reinigungsanschlüssen (53) weist die Transportleitung (1) Molchaufgaben (32) auf, in deren Bereich Molchsender (33) angeordnet sind. Ein Molchsender (33) besteht im wesentlichen aus einer im wesentlichen zylindrisch ausgebildeten Molchkammer (35), die von einem Gehäuse (36) begrenzt ist, das im Bereich seiner der Transportleitung (1) zuwendbaren Ausdehnung mit einer Senderkupplung (37) versehen ist, die eine an im Bereich der Transportleitung (1) angeordnete Kuppelelemente angepaßte Ausbildung aufweist. Im Bereich eines der Senderkupplung (37) abgewandten Endes weist das Gehäuse (36) einen Senderdeckel (38) auf, der lösbar mit dem Gehäuse (36) verbunden ist und mit einem Durchlaß (39) sowie einer Druckkupplung (40) versehen ist. Über die Druckkupplung (40) kann ein einen Rohrmolch (41) beaufschlagendes Druckmedium in den Molchsender (33) eingeleitet werden. Der Rohrmolch (41) weist mindestens zwei Schabkanten (42) und mindestens eine Ausnehmung (43) auf, in der im Bereich der Transportleitung (1) anhaftende Verunreinigungen gesammelt werden. Im Bereich seiner der Senderkupplung (37) zugewandten Ausdehnung weist das Gehäuse (36) einen Querstutzen (44) auf, der sich mit einer Stutzenlängsachse (45) im wesentlichen senkrecht zu einer Senderlängsachse (46) erstreckt.

Im Bereich der Materialaufnahmen (6) sind Molchfänger (34) angeordnet, die im wesentlichen ähnlich dem Molchsender (33) ausgebildet sind und jeweils eine von einem Gehäuse (47) begrenzte Molchkammer (48) aufweisen. Die Molchkammer (48) ist mit einer Fängerkupplung (49) sowie einem vom Gehäuse (47) abnehmbaren Fängerdeckel (50) versehen. Im Bereich des Fängerdeckels (50) sind ein Durchlaß (51) sowie eine Druckentlastung (52) angeordnet.

Grundsätzlich ist es jedoch auch möglich, statt des Molchsenders (33) und des Molchfängers (34) eine integrierte Molchaufnahme vorzusehen, die sowohl ein Senden als auch ein Empfangen von Rohrmolchen (41) ermöglicht. Bei der Verwendung einer derartigen integrierten Molchaufnahme werden zweckmäßigerweise im Bereich der Materialaufnahmen (6) mit einer Druckeinleitung versehene Wendeschleifen angeordnet, die eine Zurückleitung des Rohrmolches (41) zulassen.

Zur vorgebbaren Zuschaltung des Molchsenders (33) und des Molchfängers (34) sind im Bereich der der Transportleitung (1) zugewandten Anschlüsse des Molchsenders (33) bzw. des Molchempfängers (34) Absperreinrichtungen (54) angeordnet, die gleichfalls wie die Absperreinrichtungen (11,12) als elektrisch oder pneumatisch gesteuerte Kugelhähne ausgebildet sein können.

Zur Förderung eines zu transportierenden Materials von einer Materialquelle (5) zu einer Materialaufnahme (6) wird im Bereich der Bedienwarte (20) ein entsprechendes Steuerkommando eingegeben. Bei einer mit einem Speicher (25) versehenen Steuereinrichtung (22) wird in Abhängigkeit von der Eingabe eine im Speicher (25) abgelegte Verknüpfungstabelle abgearbeit und erforderliche Steuersignale über Steuerleitungen (55) zu Betätigungseinrichtungen (56) der Leitungsweichen (16) übertragen. Die Betätigungseinrichtungen (56) können als Elektromotore ausgebildet sein, die über elektrisch leitfähige Steuerleitungen (55) angesteuert werden.

Insbesondere ist aber daran gedacht, im Bereich von explosionsgefährdeten Anlagen pneumatische Betätigungseinrichtungen (56) vorzusehen, denen über die Steuerleitung (55) ein Druckmedium, vorzugweise Luft, zugeführt wird.

Nach einer Einschaltung der angewählten Leitungsweichen (16) erfolgt mit Hilfe der Pumpe (8) ein Materialfluß von der Materialquelle (5) zur angewählten Materialaufnahme (6). Bei einer gruppenweisen Anordnung der Materialaufnahmen (6) können die Verknüpfungstabellen im Bereich des Speichers (25) auf wenige Schaltfunktionen komprimiert werden.

Nach der Förderung eines bestimmten Produktes durch die Transportleitung (1) werden die Absperreinrichtungen (54) auf Durchlaß geschaltet. Nach einer Druckbeaufschlagung des Molchsenders (33) über die Druckkupplung (40) wird der Rohrmolch (41) durch die Transportleitung (1) hindurchgedrückt und streift mit seinen Schabkanten (42) an einer Wandung der Transportleitung (1) anhaftende Verunreinigungen ab. Der wesentliche Anteil der Verunreinigungen wird vor dem Rohrmolch (41) hergeschoben und über ein geeignet ausgebildetes Wirbelbett (57) in einem Schwebezustand gehalten. Die erste Schabkante (42) überwindende Verunreinigungen werden im Bereich der Ausnehmungen (43) gesammelt. Darüber hinaus nimmt die Ausnehmung (43) von der zweiten Schabkante (42) abgetrennte Verunreinigungen auf. Die Qualität der Reinigung kann durch weitere nachfolgende Ausnehmungen (43) sowie Schabkanten (42) verbessert werden.

**Patentansprüche**

1. Vorrichtung zum Transport mindestens eines fließfähigen Materials, die mindestens einen Einlaß, mindestens einen Auslaß sowie mindestens eine den Einlaß mit dem Auslaß verbindende Transportleitung aufweist, dadurch gekennzeichnet, daß im Bereich der mindestens eine Materialquelle (5) mit mindestens zwei Materialaufnahmen (6) verbindenden molchbaren Transportleitung (1) mindestens eine einen vorgebbaren Materialweg einstellende molchbare Leitungsweiche (16) angeordnet ist, die eine automatisch ansteuerbare Betätigungseinrichtung (56) aufweist.

2. Vorrichtung nach Anspruch 1, dadurch gekennzeichnet, daß die Betätigungseinrichtung (56) als eine pneumatisch verstellbare Kolben-Zylinder-Anordnung ausgebildet ist.

3. Vorrichtung nach Anspruch 1, dadurch gekennzeichnet, daß die Betätigungseinrichtung (56) als ein elektrisch angetriebener Verstellmotor ausgebildet ist.

4. Vorrichtung nach Anspruch 1, dadurch gekennzeichnet, daß die Betätigungseinrichtung (56) als eine hydraulisch verstellbare Kolben-Zylinder-Anordnung ausgebildet ist.

5. Vorrichtung nach Anspruch 1 bis 4, dadurch gekennzeichnet, daß die Leitungsweiche (16) als ein einen Einlaß mit mindestens zwei Auslässen verbindendes Mehrwegeventil ausgebildet ist.

6. Vorrichtung nach Anspruch 5, dadurch gekennzeichnet, daß die Leitungsweiche (16) als ein einen Einlaß mit zwei Auslässen verbindendes Drei-Wege-Ventil (18) ausgebildet ist.

7. Vorrichtung nach Anspruch 5, dadurch gekennzeichnet, daß die Leitungsweiche (16) als ein einen Einlaß mit fünf Auslässen verbindendes Sechs-Wege-Ventil (15) ausgebildet ist.

8. Vorrichtung nach Anspruch 1 bis 7, dadurch gekennzeichnet, daß eine als Drei-Wege-Ventil (18) ausgebildete Leitungsweiche (16) im Bereich einer Verzweigung der Transportleitung (1) zu mindestens einer Materialaufnahme (6) angeordnet ist.

9. Vorrichtung nach Anspruch 1 bis 8, dadurch gekennzeichnet, daß eine als Sechs-Wege-Ventil (15) ausgebildete Leitungsweiche (16) im Bereich einer Verzweigung zu gruppenartig angeordneten Materialaufnahmen (6) angeordnet ist und eine Ausbildung als ein die Anwahl einer bestimmten Materialaufnahme (6) zulassender Tankverteiler aufweist.

10. Vorrichtung nach Anspruch 1 bis 9, dadurch gekennzeichnet, daß mindestens eine der Betätigungseinrichtungen (56) mit einer einen Schaltzustand vorgebenden Steuereinrichtung (22) verbunden ist.

11. Vorrichtung nach Anspruch 1 bis 10, dadurch gekennzeichnet, daß im Bereich der Steuereinrichtung (22) eine die Anwahl mindestens einer Verbindung einer Materialquelle (5) mit einer Materialaufnahme (6) zulassende Eingabeeinheit (21) angeordnet ist.

12. Vorrichtung nach Anspruch 1 bis 11, dadurch gekennzeichnet, daß im Bereich der Steuereinrichtung (22) eine die Ablaufsteuerung der für eine ausgewählte Verbindung erforderlichen Schaltvorgänge vorgebende Verknüpfungstabelle abgespeichert ist.

13. Vorrichtung nach Anspruch 12, dadurch gekennzeichnet, daß der Speicher (25) freiprogrammierbar ausgebildet ist.

14. Vorrichtung nach Anspruch 1 bis 13, dadurch gekennzeichnet, daß im Bereich der Steuereinrichtung (22) zur optischen Darstellung einer angewählten Verbindung eine Anzeigeeinheit (24) angeordnet ist.

15. Vorrichtung nach Anspruch 1 bis 14, dadurch gekennzeichnet, daß mindestens eine der Materialquellen (5) als ein Lösekessel (7) ausgebildet ist.

16. Vorrichtung nach Anspruch 1 bis 15, dadurch gekennzeichnet, daß im Bereich mindestens einer eine Materialquelle (5) mit der Transportleitung (1) verbindenden Anschlußleitung (9,10) eine Absperreinrichtung (11,12) angeordnet ist.

17. Vorrichtung nach Anspruch 16, dadurch gekennzeichnet, daß mindestens eine der Absperreinrichtungen (11,12) als ein gesteuerter Kugelhahn ausgebildet ist.

18. Vorrichtung nach Anspruch 1 bis 17, dadurch gekennzeichnet, daß im Bereich mindestens einer der Anschlußleitungen (9,10) eine Pumpe (8) angeordnet ist.

19. Vorrichtung nach Anspruch 1 bis 18, dadurch gekennzeichnet, daß sowohl im im Bereich eines der Materialquelle (5) als auch im Bereich eines der Transportleitung (1) zugewandten Anschlusses der Pumpe (8) jeweils eine Absperreinrichtung (11,12) angeordnet ist.

20. Vorrichtung nach Anspruch 1 bis 19, dadurch gekennzeichnet, daß zwei mit jeweils einer Materialquelle (5) verbundene Transportleitungen (1) vorgesehen sind, die über als Drei-Wege-Ventile (18) ausgebildete Leitungsweichen (16) mindestens eine Querleitung (17) speisen, in deren Bereich eine als Drei-Wege-Ventil (18) ausgebildete Leitungsweiche (16) vorgesehen ist, über die die Querleitung (17) mit einem den Anschluß mindestens einer Materialaufnahme (6) zulassenden Sechs-Wege-Ventil (15) verbunden ist.

21. Vorrichtung nach Anspruch 1 bis 20, dadurch gekennzeichnet, daß mindestens eines der molchbaren Drei-Wege-Ventile (18) als ein Drehventil ausgebildet ist, in dessen Bereich wahlweise eine Verbindung von jeweils zwei von drei Anschlüssen (26,27,28) über ein Verbindungselement (29) vorgesehen ist.

22. Vorrichtung nach Anspruch 1 bis 21, dadurch gekennzeichnet, daß die Transportleitung (1) im Bereich mindestens eines Reinigungsanschlusses (53) eine die Beaufschlagung mit einem Rohrmolch (41) zulassende Molchaufgabe (32) aufweist.

23. Vorrichtung nach Anspruch 1 bis 22, dadurch gekennzeichnet, daß die Molchaufgabe (32) zur Ankopplung eines den Rohrmolch (41) in die Transportleitung (1) einleitenden Molchsenders (33) an den Molchsender (33) angepaßt ausgebildet ist.

24. Vorrichtung nach Anspruch 1 bis 23, dadurch gekennzeichnet, daß der Molchsender (33) eine von einem Gehäuse (36) begrenzte Molchkammer (35) aufweist, die im Bereich ihrer der Transportleitung (1) zuwendbaren Ausdehnung eine Senderkupplung (37) aufweist, die angepaßt an die Molchaufgabe (32) ausgebildet ist.

25. Vorrichtung nach Anspruch 1 bis 24, dadurch gekennzeichnet, daß der Molchsender (33) im Bereich seiner der Senderkupplung (37) abgewandten Ausdehnung mit einem losnehmbaren Senderdeckel (38) versehen ist, der einen mit einer Druckkupplung (40) verbundenen Durchlaß (39) aufweist.

26. Vorrichtung nach Anspruch 1 bis 25, dadurch gekennzeichnet, daß das Gehäuse (36) im Bereich seiner der Senderkupplung (37) zugewandten Ausdehnung einen Querstutzen (44) aufweist, der sich mit einer Stutzenlängsachse (45) im wesentlichen senkrecht zu einer Senderlängsachse (46) erstreckt.

27. Vorrichtung nach Anspruch 1 bis 26, dadurch gekennzeichnet, daß im Bereich mindestens einer Materialaufnahme (6) ein Anschluß angeordnet ist, der angepaßt an mindestens einen einen Rohrmolch (41) von der Transportleitung (1) übernehmenden Molchfänger (34) ausgebildet ist.

28. Vorrichtung nach Anspruch 1 bis 27, dadurch gekennzeichnet, daß der Molchfänger (24) eine von einem Gehäuse (47) begrenzte Molchkammer (48) aufweist.

29. Vorrichtung nach Anspruch 1 bis 28, dadurch gekennzeichnet, daß das Gehäuse (47) im Bereich seiner der Transportleitung (1) zuwendbaren Ausdehnung eine angepaßt an die Molchaufgabe (32) ausgebildete Fängerkupplung (49) aufweist.

30. Vorrichtung nach Anspruch 1 bis 29, dadurch gekennzeichnet, daß das Gehäuse (47) im Bereich seiner der Fängerkupplung (49) abgewandten Ausdehnung mit einem losnehmbaren Fängerdeckel (50) versehen ist, der einen mit einer Druckentlastung (52) verbundenen Durchlaß (51) aufweist.

31. Vorrichtung nach Anspruch 1 bis 30, dadurch gekennzeichnet, daß die Transportleitung (1) einen Innendurchmesser aufweist, der geringfügig kleiner als ein Außendurchmesser des Rohrmolches (41) ausgebildet ist.

Fig. 1

Fig. 2

Fig. 3

Fig. 4

Fig. 5

Fig. 6

Fig. 7

Fig. 8

Europäisches Patentamt

**EUROPÄISCHER RECHERCHENBERICHT**

Nummer der Anmeldung

EP     92 10 7871

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 628 811 (K.K.KOMATSU SEISAKUSHO) | 1,3,5,6, 8,10,16, 22-24, 27,28 | B65G53/52 B65G53/06 F17D3/08 |
| Y | * Seite 6, letzter Absatz - Seite 7, Zeile 20 * | 7,9,17, 21,25, 26,28-31 | |
| A | * Abbildungen 1,2,8 * | 2,4, 11-15, 18-20 | |
| | --- | | |
| Y | FR-A-2 650 650 (FMC EUROPE) | 7,9,17 | |
| A | * Seite 1, Zeile 17 - Zeile 26; Abbildungen * | 1,5,6,8, 20-31 | |
| | --- | | |
| Y | DE-A-1 750 787 (OELWERKE JULIUS SCHINDLER) | 21 | |
| A | * das ganze Dokument * | 1,5-9,20 | |
| | --- | | |
| Y | EP-A-0 375 533 (FMC EUROPE) | 25,26, 28-31 | |
| A | * Spalte 6, Zeile 9 - Zeile 22; Abbildungen * | 1,5,6,8, 16, 22-24,27 | **RECHERCHIERTE SACHGEBIETE (Int. Cl.5)** B65G F17D |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 17 SEPTEMBER 1992 | NEVILLE D.J. |